# DEMANDE DE BREVET EUROPEEN

(11) **EP 1 120 187 A1**
(43) Date de publication de la demande: **01.08.2001**
(21) Numéro de dépôt: 00403579.6
(22) Date de dépôt: 18.12.2000
(51) Int. Cl.: B23K 26/06, B23K 26/12

(54) **Procédé et installation de coupage laser d'acier inoxydable ou revêtu, ou d'aluminium et alliages avec optique bifocale**

(30) Priorité: 10.01.2000 FR 0000231
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: Bertz, Christophe, 95450 Vaureal (FR); Hamy, Jean, 95370 Montigny Les Cormeilles (FR); Matile, Olivier, 75018 Paris (FR)
(74) Mandataire: Pittis, Olivier

(57) **Abrégé**

Procédé et installation de coupage d'une pièce en acier inoxydable, en acier revêtu, en aluminium ou en alliage d'aluminium par mise en oeuvre d'un moyen optique transparent ou réfléchissant pour focaliser un faisceau laser et d'un gaz d'assistance dudit faisceau laser. Le moyen optique est de type multi-focale et est choisi parmi les lentilles, les miroirs et leurs combinaisons. Le gaz d'assistance est de l'oxygène ou un mélange azote/oxygène contenant au moins 90% d'azote. Le procédé de l'invention permet d'obtenir une augmentation des performances de découpe de 40% par comparaison avec un procédé de coupage laser classique.

## Description

La présente invention concerne un procédé et une installation de coupage des aciers inoxydables, des aciers revêtus, de l'aluminium et des alliages d'aluminium par faisceau laser utilisant au moins une lentille ou au moins un miroir de type à bifocales pour focaliser le faisceau laser en au moins deux points de focalisation distincts l'un de l'autre et situés sur un même axe, et mettant en oeuvre de l'oxygène ou un mélange oxygène/azote en tant que gaz d'assistance du faisceau laser.

La découpe des aciers inoxydables, des aciers revêtus, de l'aluminium et des alliages d'aluminium par faisceau laser est couramment réalisée en mettant en oeuvre de l'azote ou de l'oxygène en tant que gaz d'assistance, encore appelé gaz de coupe.

Cependant, l'emploi d'azote conduit à des vitesses de coupe considérablement limitées et à des consommations de gaz élevées.

L'emploi d'oxygène permet de remédier aux problèmes énoncés précédemment mais son utilisation présente les inconvénients de fortement oxyder les faces de coupes et d'augmenter leur rugosité, c'est-à-dire de diminuer la qualité de la coupe.

Dès lors, il a été proposé d'utiliser des mélanges azote/oxygène en lieu et place de l'azote ou de l'oxygène de manière à tenter d'améliorer les performances du procédé de découpe par comparaison à une découpe sous azote pur ou sous oxygène pur.

Toutefois, jusqu'à présent, de tels mélanges azote/oxygène utilisés avec des lentilles ou optiques classiques n'ont pas été réellement efficaces en coupage laser au plan industriel.

Il existe donc actuellement un besoin d'un procédé de coupage laser efficace des aciers inoxydables, des aciers revêtus, de l'aluminium et des alliages d'aluminium, lequel permette d'arriver à une coupe de qualité élevée à vitesse élevée.

Dès lors, le but de la présente invention est d'améliorer les procédés existants de coupage par faisceau laser des aciers inoxydables, des aciers revêtus, de l'aluminium et des alliages d'aluminium, c'est-à-dire de proposer un procédé de découpe au laser limitant l'oxydation des faces de coupe tout en augmentant les performances de découpe d'environ 40% par comparaison avec un procédé de coupage laser utilisant de l'azote pur et conduisant à une réduction de 30 % de la rugosité par comparaison avec un procédé de coupage laser utilisant de l'oxygène.

La présente invention concerne alors un procédé de coupage d'une pièce en acier inoxydable, en acier revêtu, en aluminium ou en alliage d'aluminium par mise en oeuvre d'au moins un moyen optique transparent ou réfléchissant pour focaliser au moins un faisceau laser et d'au moins un gaz d'assistance dudit faisceau laser, dans lequel le moyen optique est de type multi-focales et le gaz d'assistance est de l'oxygène ou un mélange d'oxygène et d'azote, de préférence contenant au moins 90% d'azote.

Dans le cas de la présente invention, par moyen optique de type multi-focales, on entend que le moyen optique, par exemple une lentille, permet de focaliser le faisceau laser en plusieurs points de focalisation distincts les uns des autres, le plus souvent un premier et un deuxième points de focalisation distincts, lesquels sont généralement situés sur un axe sensiblement co-axial à l'axe de la buse du dispositif laser, c'est-à-dire de la tête laser par lequel sort le ou les faisceaux laser.

Selon le cas, le procédé de l'invention peut comprendre l'une ou plusieurs des caractéristiques suivantes :
- le gaz d'assistance est un mélange d'oxygène et d'azote contenant de 92 à 98% d'azote.
- le moyen optique est choisi parmi les lentilles, les miroirs et leurs combinaisons, de préférence une lentille, telle une lentille bifocale, c'est-à-dire focalisant le faisceau en deux points de focalisation distincts.
- le gaz d'assistance est de l'oxygène contenant moins de 500 ppm en vol. d'argon en tant qu'impuretés, de préférence de 0 à 100 ppm en vol d'argon.
- le gaz d'assistance est un mélange d'azote et d'oxygène contenant une teneur en oxygène supérieure à 0 % en vol. et inférieure à 8 % en vol., de préférence une teneur en oxygène comprise entre 150 ppm en vol. et 5 % en vol., le reste étant de l'azote et éventuellement des impuretés inévitables.
- le moyen optique de type bifocale est agencé de manière à obtenir au moins un premier point de focalisation se positionnant à proximité de la surface supérieure de la pièce à découper, de préférence en coïncidence avec ladite surface supérieure, ou dans l'épaisseur de la pièce à découper dans une région voisine de ladite surface supérieure et au moins un deuxième point de focalisation se positionnant à proximité de la surface inférieure de la pièce à couper et dans l'épaisseur de celle-ci ou en dehors de celle-ci.
- l'épaisseur de la pièce à couper est comprise entre 1.5 mm et 5 mm, et on utilise, pour cette épaisseur, une source laser de 1800 Watt de puissance par exemple.
- la pièce à couper est choisie parmi les plaques, les tôles et les tubes.
- le mélange azote/oxygène est obtenu directement sur site d'utilisation à partir d'air atmosphérique traité par un système à membrane.

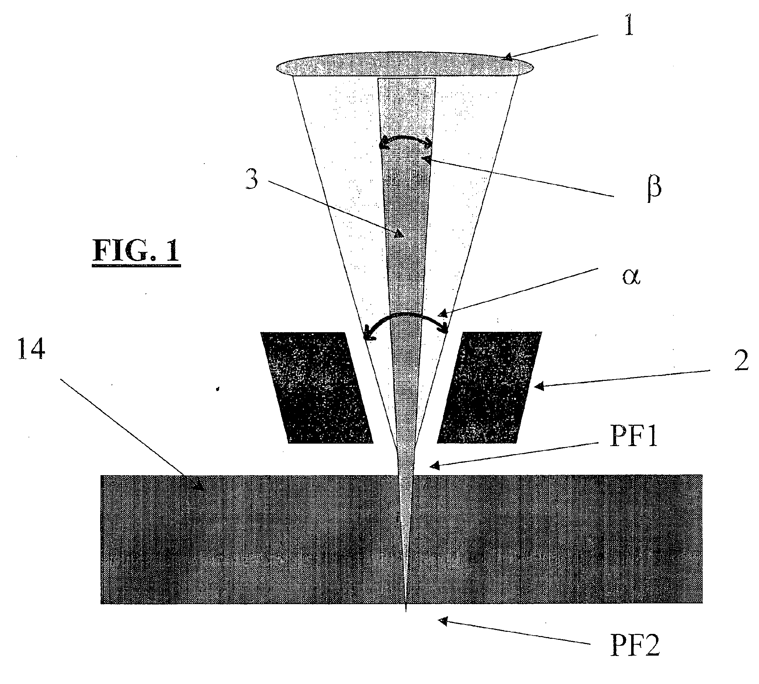

En d'autres termes, comme thématisé sur la figure 1, l'invention repose sur l'utilisation en combinaison, d'une part, d'une ou plusieurs optiques 1 transparentes ou réfléchissantes, tels des lentilles ou des miroirs, permettant d'obtenir plusieurs points de focalisation PF1, PF2 distincts du faisceau laser 3, approximativement dans le même axe et, d'autre part, d'oxygène ou d'un mélange oxygène/azote en tant que gaz d'assistance, c'est-à-dire de gaz de coupe pour couper certains types de matériaux, notamment l'aluminium et ses alliages.

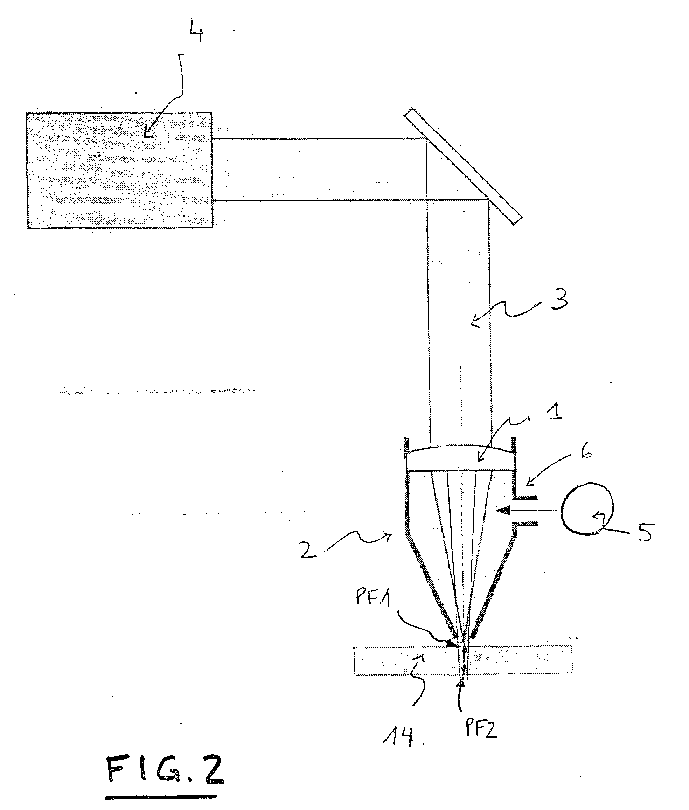

Une installation de coupage d'une pièce 14 en acier inoxydable, en acier revêtu, par exemple de peinture, en aluminium ou en alliage d'aluminium conforme à l'invention est schématisée sur la figure 2.

Celle-ci comprend au moins un générateur laser 4 pour générer au moins un faisceau laser 3,au moins une buse 2 de sortie traversée par ledit faisceau laser 3, au moins un moyen optique 1 transparent ou réfléchissant pour focaliser ledit faisceau laser 3, et au moins une source 5 de gaz d'assistance dudit faisceau laser 3 alimentant ladite buse 2 de sortie en en gaz d'assistance, l'introduction du gaz d'assistance dans la buse 2 se faisant par un ou plusieurs orifices 6 d'entrée de gaz traversant par la paroi périphérique de la buse 2.

Selon l'invention, le moyen optique 1 est de type multi-focales, de préférence une lentille multi-focales permettant d'obtenir deux points de focalisation distincts, et la source 5 de gaz d'assistance alimente la buse 2 en azote ou en un mélange azote/oxygène.

La source laser est de type CO₂ ou de type YAG, de préférence CO₂.

Des optiques 1 transparentes ou réfléchissantes à plusieurs points de focalisation utilisables dans le cadre de la présente invention sont décrites dans le document WO-A-98/14302 ou encore dans les documents DE-A-2713904, DE-A-4034745, JP-A-01048692 ou JP-A-56122690.

Comme détaillé sur la Figure 1, le premier point de focalisation PF1 issus de l'angle de convergence le plus grand, ici l'angle α, se positionne à proximité de la surface supérieure de la pièce 14 à découper, de préférence en coïncidence avec ladite surface supérieure ou dans l'épaisseur du matériau dans une région voisine de ladite surface supérieure.

Le deuxième point de focalisation PF2 issus de l'angle de convergence le plus petit, ici l'angle β, se positionne à proximité de la surface inférieure de la pièce 14 dans l'épaisseur du matériau ou en dehors de celle-ci.

Ce principe permet, par rapport à l'utilisation d'une optique standard employée à la découpe d'acier de construction sous azote d'utiliser des diamètres de buse inférieurs et donc de diminuer les consommations en gaz.

En effet, l'utilisation d'une optique standard, c'est-à-dire ayant un seul point de focalisation, implique de positionner son seul point de focalisation, donc celui pour lequel l'angle de convergence est le plus grand, à la face inférieure du matériau, voire en dessous. De ce fait, afin de laisser passer le faisceau laser, il convient d'utiliser des buses de fort diamètre, typiquement d'au moins 2 mm de diamètre, celui-ci étant d'autant plus important que l'épaisseur augmente, et donc augmente d'autant les consommations de gaz.

Au contraire, selon la présente invention, en associant une optique 1 bifocale, c'est-à-dire à au moins deux points de focalisation PF1 et PF2 distincts l'un de l'autre, à de l'oxygène ou un mélange azote/oxygène, d'une part, on diminue les consommations de gaz ainsi que susmentionné et, d'autre part, on supprimer ou on réduit nettement la présence d'oxyde sur les faces de coupe, en particulier dans le cas de la découpe des aciers inoxydables, des aciers revêtus, de l'aluminium et des alliages d'aluminium.

Dit autrement, le procédé de l'invention permet d'augmenter les performances de découpe des aciers inoxydables, des aciers revêtus, de l'aluminium et des alliages d'aluminium et de limiter la consommation de gaz de coupe tout en obtenant un bilan économique favorable par rapport à l'oxygène en incluant le gain sur le parachèvement.

Un mélange azote/oxygène utilisable dans le cadre de l'invention peut être obtenu, par exemple, directement sur site d'utilisation à partir d'air atmosphérique traité par un système à membrane de manière à diminuer sa teneur en oxygène jusqu'à une valeur souhaitée.

Un système à membrane de ce type est commercialisé par la Société L'AIR LIQUIDE sous la dénomination FLOXAL™.

Toutefois, le mélange azote/oxygène peut également être réalisé plus classiquement par mélange d'azote et d'oxygène en proportions souhaitées.

Le procédé de coupage des aciers inoxydables, des aciers revêtus, de l'aluminium et des alliages d'aluminium par faisceau laser avec lentille ou miroir bifocale selon l'invention conduit à des vitesses de coupe élevées, c'est-à-dire de l'ordre de 0,9 m/min à environ 5,9 m/min en fonction des épaisseurs, associées à des débits de gaz de coupe réduits, typiquement pas plus de 19 m³/h, et à l'obtention de pièces découpées de faible coût, en particulier pour une source laser de 1800 W de puissance par exemple.

## Revendications

1. Procédé de coupage d'une pièce en acier inoxydable, en acier revêtu, en aluminium ou en alliage d'aluminium par mise en oeuvre d'au moins un moyen optique transparent ou réfléchissant pour focaliser au moins un faisceau laser et d'au moins un gaz d'assistance dudit faisceau laser, dans lequel le moyen optique est de type multi-focale et le gaz d'assistance est de l'oxygène ou un mélange d'oxygène et d'azote.

2. Procédé selon la revendication 1, caractérisé en ce que le moyen optique multi-focale est choisi parmi les lentilles, les miroirs et leurs combinaisons, de préférence une lentille bifocale.

3. Procédé selon l'une des revendications 1 ou 2, caractérisé en ce que le gaz d'assistance est un mélange d'oxygène et d'azote contenant au moins 90% d'azote, de préférence de 92 à 98% d'azote.

4. Procédé selon l'une des revendications 1 à 3, caractérisé en ce que le gaz d'assistance est de d'oxygène contenant moins de 500 ppm en vol. d'argon en tant qu'impuretés, de préférence moins de 100 ppm en vol d'argon.

5. Procédé selon l'une des revendications 1 à 4, caractérisé en ce que le gaz d'assistance est un mélange azote/oxygène contenant une teneur en oxygène supérieure à 0 % en vol. et inférieure à 8 % en vol., de préférence une teneur en oxygène comprise entre 150 ppm en vol. et 5 % en vol, le reste étant de l'azote.

6. Procédé selon l'une des revendications 1 à 5, caractérisé en ce que le moyen optique est agencé de manière à obtenir au moins un premier point de focalisation se positionnant à proximité de la surface supérieure de la pièce à découper, de préférence en coïncidence avec ladite surface supérieure, ou dans l'épaisseur de la pièce à découper dans une région voisine de ladite surface supérieure et au moins un deuxième point de focalisation se positionnant à proximité de la surface inférieure de la pièce à couper et dans l'épaisseur de celle-ci ou en dehors de celle-ci.

7. Procédé selon l'une des revendications 1 à 6, caractérisé en ce que l'épaisseur de la pièce à couper est comprise entre 1.5 mm et 5 mm.

8. Procédé selon l'une des revendications 1 à 7, caractérisé en ce que la pièce à couper est choisie parmi les plaques, les tôles et les tubes.

9. Procédé selon l'une des revendications 1 à 8, caractérisé en ce que le mélange azote/oxygène est obtenu directement sur site d'utilisation à partir d'air atmosphérique traité par un système à membrane.

10. Installation de coupage d'une pièce en acier inoxydable, en acier revêtu, en aluminium ou en alliage d'aluminium comprenant :
- au moins un générateur laser pour générer au moins un faisceau laser,
- au moins une buse de sortie traversée par ledit faisceau laser,
- au moins un moyen optique transparent ou réfléchissant pour focaliser ledit faisceau laser, et
- au moins une source de gaz d'assistance dudit faisceau laser alimentant ladite buse de sortie en en gaz d'assistance,
caractérisée en ce que :
- le moyen optique est de type multi-focale, et
- la source de gaz d'assistance alimente la buse en oxygène ou en un mélange azote/oxygène, de préférence contenant au moins 90% d'azote.
